# EUROPEAN PATENT APPLICATION

(11) **EP 3 785 852 A1**
(43) Date of publication of application: **03.03.2021**
(21) Application number: 19791764.4
(22) Date of filing: 24.04.2019
(51) Int. Cl.: B24D 3/00

(54) **POLYCRYSTALLINE ABRASIVE GRAINS, AND GRINDING WHEEL PROVIDED WITH SAME**

(30) Priority: 27.04.2018 JP 2018086323
(71) Applicant: SUMITOMO ELECTRIC INDUSTRIES, LTD., Osaka-shi, Osaka 541-0041 (JP); Sumitomo Electric Hardmetal Corp., Itami-shi, Hyogo 664-0016 (JP); A.L.M.T. Corp., Minato-ku Tokyo 105-0014 (JP)
(72) Inventor: HARADA, Takashi, Osaka-shi, Osaka 541-0041 (JP); OKAMURA, Katsumi, Osaka-shi, Osaka 541-0041 (JP); ISHII, Akito, Osaka-shi, Osaka 541-0041 (JP); KUKINO, Satoru, Itami-shi, Hyogo 664-0016 (JP); NAKAMURA, Nobuhide, Kato-shi, Hyogo 679-0221 (JP); NAKAMURA, Tomokazu, Kato-shi, Hyogo 679-0221 (JP)
(74) Representative: Boult Wade Tennant LLP
(86) International application number: PCT/JP2019/017451
(87) International publication number: WO 2019/208640

(57) **Abstract**

A polycrystalline abrasive grain includes: a plurality of cBN particles; and a binder that binds the plurality of cBN particles, wherein the binder includes at least one of nitride, carbide, and carbonitride of one selected from a group consisting of a group 4a metal, a group 5a metal, and a group 6a metal in a periodic table, and a content of the binder in the polycrystalline abrasive grain is more than or equal to 5 volume% and less than or equal to 50 volume%.

## Description

### TECHNICAL FIELD

The present invention relates to a polycrystalline abrasive grain and a grinding wheel including the polycrystalline abrasive grain. The present application claims a priority based on Japanese Patent Application No. 2018-086323 filed on April 27, 2018, the entire content of which is incorporated herein by reference.

### BACKGROUND ART

Conventionally, abrasive grains are disclosed in PTL 1 (Japanese Patent Laying-Open No. 9-267266) and PTL 2 (Japanese National Patent Publication No. 2015-524357), for example.

### CITATION LIST

### PATENT LITERATURE

PTL 1: Japanese Patent Laying-Open No. 9-267266
PTL 2: Japanese National Patent Publication No. 2015-524357

### SUMMARY OF INVENTION

A polycrystalline abrasive grain according to one embodiment of the present disclosure includes: a plurality of high-pressure phase type boron nitride (hereinafter, referred to as cBN) particles; and a binder that binds the plurality of cBN particles, wherein the binder includes at least one of nitride, carbide, and carbonitride of at least one selected from a group consisting of a group 4a metal, a group 5a metal, and a group 6a metal in a periodic table, and a content of the binder in the polycrystalline abrasive grain is more than or equal to 5 volume% and less than or equal to 50 volume%.

### BRIEF DESCRIPTION OF DRAWINGS

Fig. 1 is a plan view of a polycrystalline abrasive grain according to an embodiment of the present disclosure.
Fig. 2 is a cross sectional view taken along a II-II line in Fig. 1.
Fig. 3 shows a photograph of the polycrystalline abrasive grain according to the embodiment of the present disclosure.
Fig. 4 is a cross sectional view of a grinding wheel using polycrystalline abrasive grains according to an example.

### DETAILED DESCRIPTION

### [Problem to be solved by the Present Disclosure]

Conventional abrasive grains are likely to be worn, disadvantageously.

### [Advantageous Effect of the Present Disclosure]

According to the description above, there can be obtained a polycrystalline abrasive grain that is less likely to be worn.

### [Description of Embodiments]

First, embodiments of the invention of the present application are listed and described.

In paragraph 0003, PTL 1 discloses that cBN abrasive grains used for a grinding stone are generally a mixture of: cBN monocrystalline abrasive grains having excellent cuttability and suitable for high-speed grinding and heavy grinding because the cBN monocrystalline abrasive grains are prone to self-sharpening; and cBN polycrystalline abrasive grains likely to attain a smooth grindstone surface and suitable for surface finishing because the cBN polycrystalline abrasive grains have excellent strength. However, under high-speed processing conditions, wear resistance is insufficient in the grinding stone configured as described above. This is presumably because heat resistance of cBN itself is insufficient.

In paragraph 0021, PTL 2 discloses that: a super abrasive material includes a cBN monocrystalline structure, and means for modifying a crystal fracture path of the cubic boron nitride; the means for modifying the crystal fracture path of the cubic boron nitride includes a plurality of particles; and the plurality of particles can be non-catalyst, non-binder particles, such as titanium nitride (TiN), included in the cBN monocrystalline structure.

It is presumed that the non-catalyst particles in the super abrasive material lead to decreased fracture strength to promote a self-sharpening function during a grinding process, thus resulting in reduced grinding resistance. However, increased crushing of the abrasive grains is resulted. Hence, the super abrasive grains and the grinding wheel are greatly worn.

Meanwhile, a polycrystalline abrasive grain according to one embodiment of the present disclosure includes: a plurality of cBN particles; and a binder that binds the plurality of cBN particles, wherein the binder includes at least one of nitride, carbide, and carbonitride of at least one selected from a group consisting of a group 4a metal, a group 5a metal, and a group 6a metal in a periodic table, and a content of the binder in the polycrystalline abrasive grain is more than or equal to 5 volume% and less than or equal to 50 volume%. The group 4a element in the periodic table refers to titanium, zirconium, and hafnium. The group 5a element in the periodic table refers to vanadium, niobium, and tantalum. The group 6a element in the periodic table refers to chromium, molybdenum, and tungsten. The cBN particles may be monocrystalline or may be polycrystalline.

In the polycrystalline abrasive grain thus configured, the binder excellent in heat resistance is used, with the result that wear can be suppressed. Further, with the polycrystalline structure, the abrasive grain is less crushed, thus suppressing wear.

When the content of the binder is less than 5%, the plurality of cBN particles are not sufficiently bound due to the small amount of the binder. As a result, the cBN particles fall to result in increased wear. When the content of the binder is more than 50%, a ratio of the cBN particles is decreased due to the large amount of the binder. As a result, a ratio of direct contact between a workpiece and the binder is increased in a grinding step, thus resulting in increased wear.

Preferably, the polycrystalline abrasive grain has a first surface formed at an outer surface of the polycrystalline abrasive grain, and at least one recess is formed in the first surface. The polycrystalline abrasive grain has a working surface serving as the first surface to come into contact with a workpiece, and at least one recess may be formed in the working surface. When the recess is formed, portions other than the recess work on the workpiece, thus resulting in a decreased area of contact with the workpiece. As a result, cutting resistance can be reduced. The reduced cutting resistance leads to prevention of falling of the abrasive grain. This results in decreased wear of a grinding wheel using this polycrystalline abrasive grain. Furthermore, grinding swarf enters the recess. This facilitates removal of grinding swarf from the grinding surface of the polycrystalline abrasive grain as compared with a case where no recess is provided.

Preferably, a value obtained by dividing a total area of the recess by a total area of the working surface and the recess of the polycrystalline abrasive grain is more than or equal to 0.5 and less than or equal to 0.99. When this value is more than or equal to 0.5, a multiplicity of recesses are formed and many pieces of grinding swarf enter the recesses, thus resulting in improved cuttability. When this value is less than or equal to 0.99, the working surface (surface other than the recesses) remains sufficiently, thus resulting in improved cuttability. The area of each recess can be found in such a manner that a digital microscope having a measurement function (for example, KEYENCE VHX-5000) is used to capture an image of the abrasive grain surface in a direction perpendicular to the working surface. Since the recess looks dark, a portion with a low luminance is extracted to find the area of the recess.

Preferably, the binder includes at least one selected from a group consisting of TiN, TiCN, ZrN, HfN, VN, NbCN, TaC, CrN, MoC, and WC. By using such a binder, there can be obtained a polycrystalline abrasive grain that is particularly less likely to be worn.

Preferably, a grinding wheel includes the above-described polycrystalline abrasive grain.

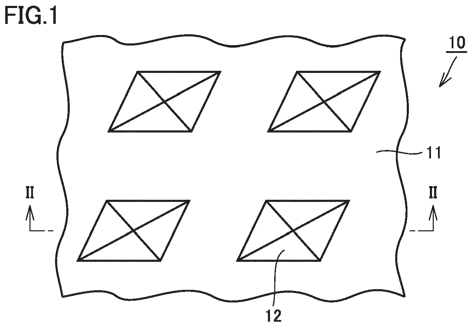

Fig. 1 is a plan view of a polycrystalline abrasive grain according to an embodiment of the present disclosure. As shown in Fig. 1, recesses 12 may be provided in a working surface 11 serving as a first surface of a polycrystalline abrasive grain 10. Recesses 12 may not be provided. Recesses 12 are regularly provided in Fig. 1, but may be irregularly provided. The shape of each recess 12 is a shape of parallelogram in Fig. 1 but is not limited thereto. The shape of each recess 12 may be any of various shapes such as a polygonal shape, a circular shape, and an elliptical shape.

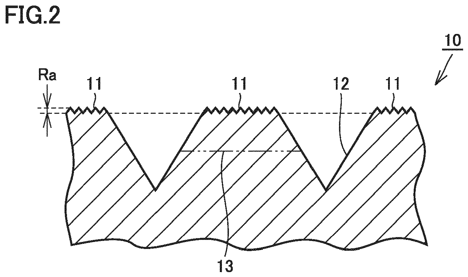

Fig. 2 is a cross sectional view taken along a II-II line in Fig. 1. As shown in Fig. 2, roughness Ra of working surface 11 is not particularly limited; however, roughness Ra of polished working surface 11 is 1 µm, for example. A ratio of the areas of recesses 12 to the total area of recesses 12 and working surface 11 to come in contact with a workpiece is preferably more than or equal to 50% and less than or equal to 90%. A lower surface 13 relative to working surface 11 may be provided. Lower surface 13 does not come into contact with the workpiece. In calculating the above-described ratio of the areas, the area of this lower surface 13 is included in the areas of recesses 12. Only a surface to work for the grinding process is working surface 11. Determination as to whether or not a surface is a surface to work for the grinding process is made in the following manner. For example, a digital microscope having a measurement function (for example, KEYENCE VHX-5000) is used to capture an image of a three-dimensional shape of the abrasive grain surface in the direction perpendicular to the working surface, and an outermost surface thereof can be recognized as working surface 11.

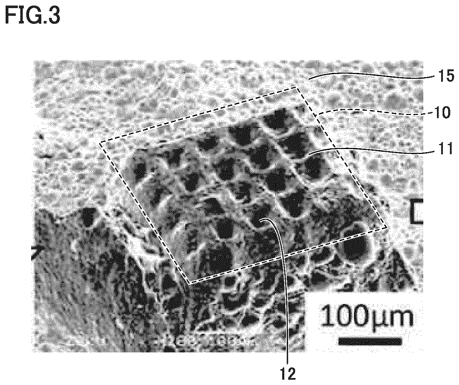

Fig. 3 shows a photograph of the polycrystalline abrasive grain according to the embodiment of the present disclosure. As shown in Fig. 3, recesses 12 can be formed by irradiating working surface 11 of polycrystalline abrasive grain 10 with laser. As a method for forming recesses 12, not only laser irradiation but also electric discharge processing, mechanical processing, and the like can be employed. Polycrystalline abrasive grain 10 is fixed by brazing to a core 15 having a cylindrical shape.

### [Details of Embodiments of the Invention of the Present Application]

### (Example 1)

### <Completed Powder Step>

As binder particles, TiN, TiCN, ZrN, HfN, VN, NbCN, TaC, CrN, MoC, and WC were prepared. The average particle size thereof was 1 µm.

The average particle size was measured using a laser diffraction type particle size distribution measurement device (Shimadzu Corporation, SALD-2300). Also in each of examples and comparative examples below, the average particle size was measured using the same device.

These binder particles and Al particles were mixed at the following ratio: the binder particles : Al = 65 : 35 (mol%).

Heat treatment was performed for 30 minutes at a temperature of 1000°C to react the binder particles with Al, thereby obtaining a compound. The obtained compound was introduced into a carbide pot together with ethanol and a carbide ball having a diameter of 6 mm. Ball mill pulverization was performed until the average particle size became about 1 µm, thereby producing particles including the binder and aluminum.

The particles (having a specific gravity shown in Tables 1 and 2) including the binder and aluminum and cBN particles (having an average particle size of 3 µm and a specific gravity of 3.5 g/cm³) were weighed at such a ratio that the volume ratio of the binder became 1, 5, 10, 30, 50 and 60%. These were subjected to ball mill mixing using a silicon nitride ball having a diameter of 5 mm. Accordingly, a total of 60 types of completed powders were obtained, i.e., ten types of binders and six types of volume ratios of the binders in the completed powders.

### <Filling and Sintering Step>

A capsule composed of Mo is filled with each of the obtained 60 types of completed powders. Then, sintering was performed using a ultra-high pressure sintering device at 6 GPa and 1500°C for 30 minutes. The capsule having been through the sintering is mechanically processed using a diamond wheel to remove Mo, thereby obtaining a sintered material. That is, the type of the binder in the sintered material is one of the ten types and the type of the volume ratio of the binder in the sintered material is one of the six types. Thus, 60 types of sintered materials were obtained in total.

### <Pulverizing Step>

Each of the above-described sintered materials was mechanically processed into a thin plate having a shape with each side of 5 mm and a thickness of 1 mm, and was then pulverized using a carbide mortar and a carbide bar. The pulverization and classification with a sieve were repeated. Accordingly, 60 types of polycrystalline abrasive grains having an average grain size of 70 µm were obtained.

### <Evaluations of Polycrystalline Abrasive Grains>

Each of the produced polycrystalline abrasive grains was subjected to a qualitative analysis using an X-ray diffractometer to identify a composition thereof. As a result, each of the 60 types of polycrystalline abrasive grains was composed of a binder such as TiN, cBN, and AlB₂.

A cross section of each of the polycrystalline abrasive grains was polished, and was observed at a magnification of 2000x using a SEM (Scanning Electron Microscope). Based on a difference in contrast, a cBN region in the polycrystalline abrasive grain and a binder region in the polycrystalline abrasive grain were specified. For the binder region, EDX (Energy Dispersive X-ray spectrometry) was used to find a ratio of elements included in the binder, thereby determining the composition of the binder.

Image processing software (trade name: WinROOF provided by Mitani Corporation) was used to calculate the area of the cBN region in the polycrystalline abrasive grain and the area of the binder region in the polycrystalline abrasive grain. A ratio of the area of cBN to the total of the area of the cBN region and the area of the binder region was defined as the content (volume%) of cBN in the polycrystalline abrasive grain. A ratio of the area of the binder to the total of the area of the cBN region and the area of the binder region was defined as the content (volume%) of the binder in the polycrystalline abrasive grain. In each of the 60 types of polycrystalline abrasive grains having the compositions identified in the section <Evaluations of Polycrystalline Abrasive Grains>, the contents (volume%) of cBN and the binder were calculated based on the above-described area ratios. In each of the 60 types of polycrystalline abrasive grains, the volume blending ratio of cBN and the binder at the production stage, and the contents (volume%) of cBN and the binder calculated from the above-described area ratios were the same. Therefore, the contents (volume%) of cBN and the binder was calculated based on the area ratios of cBN and the binder, thereby precisely calculating the contents. In the observation image (photograph of the structure), cBN and the binder are represented by different brightnesses. An appropriate threshold value (a value of brightness indicating a boundary between white and black in the image) is selected, a region having a brightness of more than or equal to the threshold value is represented by white, and a region having a brightness of less than the threshold value is represented by black. This is called "binarization process". By selecting the appropriate threshold value, cBN in the image observation is represented by one of white and black and the binder is represented by the other of white and black.

It should be noted that the threshold value for the binarization process is adjusted as follows. The observation image is compared with an image having been through a binarization process employing a certain threshold value. It is determined whether the sizes and shapes of cBN and the binder in the observation image and the sizes and shapes of cBN and the binder in the image having been through the binarization process are equivalent to each other. When they are equivalent to each other, the threshold value is employed. When they are not equivalent to each other, the binarization process is performed again with a different threshold value. When the sizes and shapes of cBN and the binder in the observation image and the sizes and shapes of cBN and the binder in the image having been through the binarization process are equivalent to each other, the threshold value is employed. When they are not equivalent to each other, the binarization process is performed again with a different threshold value. This process is repeated to adjust the threshold value until the sizes and shapes of cBN and the binder in the observation image and the sizes and shapes of cBN and the binder in the image having been through the binarization process become equivalent to each other.

### <Production and Evaluations of Single-Layer Wheels>

62 types of brazed single-layer wheels (grinding wheels) were produced by brazing, onto respective cores each having a cylindrical shape, the produced 60 types of polycrystalline abrasive grains (average grain size of 70 µm), commercially available cBN monocrystalline abrasive grains (average grain size of 75 µm), and cBN polycrystalline abrasive grains (average grain size of 75 µm). Each of the grinding wheels is sized to have an outer diameter of 50 mm, a width of 8 mm, and a central hole diameter of 20 mm. The grinding wheel has a cylindrical shape.

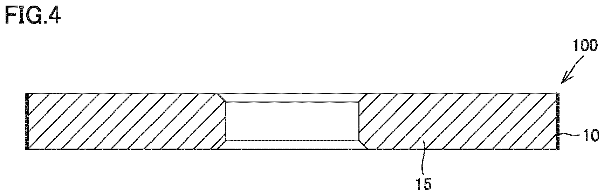

A plurality of polycrystalline abrasive grains (total mass of 40 mg) were fixed onto a surface of the grinding wheel by brazing. The number of the polycrystalline abrasive grains attached to one grinding wheel was 1150. Fig. 4 is a cross sectional view of a grinding wheel using polycrystalline abrasive grains according to an example. In a grinding wheel 100, polycrystalline abrasive grains 10 are fixed onto an outer circumferential surface of a core 15 by brazing.

This grinding wheel was used to grind a hardened steel (SCM415) at a circumferential speed of 2700 m/min, a cut-in of 1.2 mm, and a feed rate of 50 mm/min while cooling a grinding surface using emulsion type coolant, so as to evaluate a grinding ratio. The respective shapes of the grinding wheel before, during, and after the grinding process were transferred onto a carbon plate, and a wear amount of the abrasive grains was measured in accordance with the obtained shapes of the grinding wheel. A result of this (grinding ratio) is shown in Table 1 and Table 2.

**[Table 1]**

| Table 1 | | Composition of Binder | | | | |
|---|---|---|---|---|---|---|
| | | TiN | TiCN | ZrN | HfN | VN |
| Specific Gravity (g/cm³) | | 4.5 | 4.4 | 6.1 | 10.7 | 5.0 |
| Volume Ratio of Binder (%) | 1 | 1450 | 1450 | 1450 | 1450 | 1450 |
| | 5 | 3000 | 3050 | 3100 | 3200 | 3000 |
| | 10 | 3500 | 3550 | 3600 | 3700 | 3500 |
| | 30 | 3700 | 3750 | 3800 | 3900 | 3700 |
| | 50 | 2500 | 2550 | 2600 | 2700 | 2500 |
| | 60 | 1700 | 1700 | 1800 | 1900 | 1700 |

**[Table 2]**

| Table 2 | | Composition of Binder | | | | |
|---|---|---|---|---|---|---|
| | | NbCN | TaC | CrN | MoC | WC |
| Specific Gravity (g/cm³) | | 6.5 | 11.1 | 4.9 | 7.2 | 11.8 |
| Volume Ratio of Binder (%) | 1 | 1450 | 1450 | 1450 | 1450 | 1450 |
| | 5 | 3050 | 3200 | 2900 | 2800 | 2900 |
| | 10 | 3550 | 3700 | 3400 | 3300 | 3400 |
| | 30 | 3750 | 3900 | 3600 | 3500 | 3600 |
| | 50 | 2550 | 2700 | 2400 | 2300 | 2400 |
| | 60 | 1750 | 1900 | 1600 | 1500 | 1600 |

Each of the four-digit numbers in Tables 1 and 2 represents a grinding ratio of a grinding wheel. A grinding ratio of a grinding wheel of a comparative example 1 using the cBN monocrystalline abrasive grains was 1100, and a grinding ratio of a grinding wheel of a comparative example 2 using the cBN polycrystalline abrasive grains was 1400.

Each grinding ratio is defined by: an amount of removal (volume) of the workpiece/the wear amount (volume) of the abrasive grains. It is indicated that the grinding ratio is small in each of the grinding wheel in which the volume ratio of the binder is 1% and the grinding wheel in which the volume ratio of the binder is 60%. It is indicated that when the grinding ratio is small, the volume of the workpiece that can be ground per unit volume of the abrasive grains is small. In each of the grinding wheel in which the volume ratio of the binder is 1% and the grinding wheel in which the volume ratio of the binder is 60%, it is considered that the polycrystalline abrasive grains are likely to be worn to result in such a small grinding ratio.

It should be noted that for an analysis of the polycrystalline abrasive grains of each grinding wheel, a portion of the abrasive grain layer of the grinding wheel is first cut mechanically and is removed, and then a resin embedding process is performed. Next, the cross section of the polycrystalline abrasive grain is polished, and the analysis is performed in accordance with the above-described section <Evaluations of Polycrystalline Abrasive Grains>. Accordingly, the composition of the polycrystalline abrasive grain and the volume ratio of the binder can be determined. The same applies to an analysis of a below-described multilayer wheel.

### <Production and Evaluations of Multilayer Wheels>

Apart from the above-described single-layer wheels, 62 types of resin-bonding multilayer wheels (grinding wheels) were produced in the following manner. Each of the produced 60 types of polycrystalline abrasive grains, the cBN monocrystalline abrasive grains, and the cBN polycrystalline abrasive grains was coated with nickel, and was then mixed with a thermosetting resin and a filler. The resultant mixture was then fixed to an outer circumferential surface of a core having a cylindrical shape. Each of the grinding wheels was sized to have an outer diameter of 50 mm, a width of 10 mm, a hole diameter of 20 mm, and an abrasive grain layer thickness of 3 mm, and a degree of concentration of the abrasive grains was 100. The degree of concentration of 100 means that the volume ratio of cBN in the abrasive grain layer is 25%.

Each of these grinding wheels was used to grind a hardened steel (SCM415) at a circumferential speed of 3000 m/min, a cut-in of 0.8 mm, and a feed rate of 50 mm/min while cooling a grinding surface using emulsion type coolant, so as to evaluate a grinding ratio. The respective shapes of the grinding wheel before and after the grinding process were transferred onto a carbon plate, and a wear amount of the abrasive grains was measured in accordance with the obtained shapes of the grinding wheel. A result of this (grinding ratio) is shown in Table 3 and Table 4.

**[Table 3]**

| Table 3 | | Composition of Binder | | | | |
|---|---|---|---|---|---|---|
| | | TiN | TiCN | ZrN | HfN | VN |
| Volume Ratio of Binder (%) | 1 | 1150 | 1150 | 1150 | 1150 | 1150 |
| | 5 | 1750 | 1800 | 1850 | 1950 | 1750 |
| | 10 | 1900 | 1950 | 2000 | 2100 | 1900 |
| | 30 | 2050 | 2100 | 2150 | 2250 | 2050 |
| | 50 | 2000 | 2050 | 2100 | 2200 | 2000 |
| | 60 | 1500 | 1500 | 1600 | 1700 | 1500 |

**[Table 4]**

| Table 4 | | Composition of Binder | | | | |
|---|---|---|---|---|---|---|
| | | NbCN | TaC | CrN | MoC | WC |
| Volume Ratio of Binder (%) | 1 | 1150 | 1150 | 1150 | 1150 | 1150 |
| | 5 | 1800 | 1950 | 1700 | 1650 | 1700 |
| | 10 | 1950 | 2100 | 1850 | 1800 | 1850 |
| | 30 | 2100 | 2250 | 2000 | 1950 | 2000 |
| | 50 | 2050 | 2200 | 1950 | 1900 | 1950 |
| | 60 | 1550 | 1700 | 1400 | 1300 | 1400 |

Each of the four-digit numbers in Tables 3 and 4 represents a grinding ratio. A grinding ratio of a grinding wheel of a comparative example 3 using the cBN monocrystalline abrasive grains was 1000, and a grinding ratio of a grinding wheel of a comparative example 4 using the cBN polycrystalline abrasive grains was 1100.

It is indicated that the grinding ratio is small in each of the grinding wheel in which the volume ratio of the binder is 1% and the grinding wheel in which the volume ratio of the binder is 60%. In each of the sample in which the volume ratio of the binder is 1% and the sample in which the volume ratio of the binder is 60%, it is considered that the polycrystalline abrasive grains are likely to be worn to result in such a small grinding ratio.

### (Example 2)

In accordance with the process from the <Completed Powder Step> to the <Filling and Sintering Step> in (Example 1), sintered materials were produced. The composition of the binder in each of the sintered materials was TiN, and the volume ratio of the binder in the sintered material was 30%.

### <Laser Cutting Step>

The sintered material was processed into a thin plate having a thickness of 0.2 mm using a surface grinder. A plurality of recesses were formed using a femtosecond laser processing machine. The shape of an opening of each recess is as shown in Table 5. The dimension thereof was adjusted such that the diameter of a circle circumscribing a polygon that constitutes a corresponding shape was 50 µm, the depth of the recess was 40 µm, and an interval between the recesses satisfies a ratio of recesses in Table 5. The ratio of recesses is calculated as follows: (the areas of the recesses) / ((the areas of the recesses) + (the area of the working surface)).

**[Table 5]**

| Table 5 | Shape of Opening of Recess | Shape of Abrasive Grain | Ratio of Recesses | Grinding Ratio |
|---|---|---|---|---|
| Sample 2-1 | Triangle | Triangular Prism | 0.9 | 1050 |
| Sample 2-2 | Triangle | Quadrangular Prism | 0.9 | 1060 |
| Sample 2-3 | Quadrangle | Triangular Prism | 0.9 | 1050 |
| Sample 2-4 | Quadrangle | Quadrangular Prism | 0.3 | 800 |
| Sample 2-5 | Quadrangle | Quadrangular Prism | 0.5 | 1020 |
| Sample 2-6 | Quadrangle | Quadrangular Prism | 0.7 | 1050 |
| Sample 2-7 | Quadrangle | Quadrangular Prism | 0.9 | 1080 |
| Sample 2-8 | Quadrangle | Quadrangular Prism | 0.99 | 1100 |
| Sample 2-9 | Hexagon | Triangular Prism | 0.9 | 1100 |
| Sample 2-10 | Hexagon | Quadrangular Prism | 0.9 | 1150 |
| Sample 2-11 | Circle | Triangular Prism | 0.5 | 980 |
| Sample 2-12 | Circle | Quadrangular Prism | 0.5 | 1000 |
| Sample 2-13 cBN Monocrvstal | No Recess | | | 350 |

A fiber laser processing machine (YLR-150/1500 provided by IPG) was used to cut the thin plate under conditions with an output of 10 W, a pulse width of 0.1 msec, a frequency of 300 Hz, and a processing speed of 1 mm/sec such that a corresponding shape shown in Table 5 was obtained and the diameter of a circle circumscribing the shape became 300 µm, thereby obtaining polycrystalline abrasive grains each having a prism shape. The prisms were introduced into a carbide pot together with ethanol and a carbide ball having a diameter of 4 mm, ball mill mixing was performed for 10 minutes, and an adhered matter, such as dross, involved in the laser cutting was removed. The dross is a melted material generated during laser cutting and remaining and adhered to a vicinity of the cut portion.

### <Production and Evaluations of Grinding Wheels>

The polycrystalline abrasive grains (samples 2-1 to 2-12 serving as the examples and sample 2-13 serving as the comparative example) from which the adhered matters had been removed were brazed onto cores each having a cylindrical shape, thereby producing brazed single-layer wheels (grinding wheels). Each of the grinding wheels is sized to have an outer diameter of 50 mm, a width of 8 mm, and a central hole diameter of 20 mm. The grinding wheel has a cylindrical shape. The grinding wheel is produced by fixing the polycrystalline abrasive grains onto the core by way of brazing so as to attain a pitch of 2.074 mm in the thickness direction and a pitch of 1.2 mm in the circumferential direction at a portion at which an abrasive grain layer is formed, with attention being paid to orientations of the abrasive grains such that the surfaces of the abrasive grains in which the recesses are formed served as the working surface of the grinding wheel. This grinding wheel was used to grind a hardened steel (SCM415) at a circumferential speed of 2700 m/min, a cut-in of 0.6 mm, and a feed rate of 50 mm/min while cooling a grinding surface using emulsion type coolant, so as to evaluate a grinding ratio. The respective shapes of the grinding wheel before and after the grinding process were transferred onto a carbon plate, and a wear amount of the abrasive grains was measured in accordance with the obtained shapes of the grinding wheel. A result of this (grinding ratio) is shown in Table 5.

From Table 5, it can be confirmed that in each of the grinding wheels of samples 2-1 to 2-12 of the examples, the grinding ratio is large and wear is small as compared with the cBN super abrasive wheel of sample 2-13 of the comparative example.

The embodiments and examples disclosed herein are illustrative and non-restrictive in any respect. The scope of the present invention is defined by the terms of the claims, rather than the embodiments described above, and is intended to include any modifications within the scope and meaning equivalent to the terms of the claims.

### REFERENCE SIGNS LIST

10: polycrystalline abrasive grain; 11: working surface; 12: recess; 15: core; 100: grinding wheel.

## Claims

1. A polycrystalline abrasive grain comprising:
a plurality of high-pressure phase type boron nitride particles; and
a binder that binds the plurality of high-pressure phase type boron nitride particles, wherein
the binder includes at least one of nitride, carbide, and carbonitride of at least one selected from a group consisting of a group 4a metal, a group 5a metal, and a group 6a metal in a periodic table, and
a content of the binder in the polycrystalline abrasive grain is more than or equal to 5 volume% and less than or equal to 50 volume%.

2. The polycrystalline abrasive grain according to claim 1, wherein the polycrystalline abrasive grain has a first surface formed at an outer surface of the polycrystalline abrasive grain, and at least one recess is formed in the first surface.

3. The polycrystalline abrasive grain according to claim 2, wherein a value obtained by dividing a total area of the recess by a total area of the first surface and the recess of the polycrystalline abrasive grain is more than or equal to 0.5 and less than or equal to 0.99.

4. The polycrystalline abrasive grain according to any one of claim 1 to claim 3, wherein the binder includes at least one selected from a group consisting of TiN, TiCN, ZrN, HfN, VN, NbCN, TaC, CrN, MoC, and WC.

5. A grinding wheel comprising the polycrystalline abrasive grain recited in any one of claim 1 to claim 4.
